# EUROPEAN PATENT SPECIFICATION

(11) **EP 4 007 124 B1**
(45) Date of publication and mention of the grant of the patent: **28.01.2026**
(21) Application number: 20856765.1
(22) Date of filing: 28.08.2020
(51) Int. Cl.: H02K 1/20, H02K 9/02, H02K 1/18

(54) **METHOD AND DEVICE FOR IMPROVING UNIFORMITY OF AXIAL TEMPERATURE DISTRIBUTION OF STATOR**
VERFAHREN UND VORRICHTUNG ZUR VERBESSERUNG DER GLEICHFÖRMIGKEIT DER AXIALEN TEMPERATURVERTEILUNG EINES STATORS
PROCÉDÉ ET DISPOSITIF DESTINÉS À AMÉLIORER L'UNIFORMITÉ DE DISTRIBUTION DE TEMPÉRATURE AXIALE D'UN STATOR

(30) Priority: 30.08.2019 CN 201910813645; 30.08.2019 CN 201910813304
(43) Date of publication of application: 01.06.2022
(73) Proprietor: Dongfang Electric Machinery Co., Ltd., Deyang, Sichuan 61800 (CN)
(72) Inventor: WANG, Chao, Sichuan 618000 (CN); ZHOU, Guanghou, Sichuan 618000 (CN); LIAO, Yigang, Sichuan 618000 (CN)
(74) Representative: Patrade A/S
(86) International application number: PCT/CN2020/112044
(87) International publication number: WO 2021/037193

(56) References cited:
- EP-A1- 3 054 565
- EP-A1- 3 351 791
- CN-A- 102 332 780
- CN-A- 109 474 113
- CN-A- 110 460 180
- CN-A- 110 504 771
- CN-U- 202 268 777
- CN-U- 202 268 777
- CN-U- 205 791 838
- US-B2- 6 504 273

## Description

### FIELD OF INVENTION

The following relates to field of generators, and more particularly to a method and structure for improving uniformity of axial temperature distribution of stator of a generator/motor.

### BACKGROUND OF INVENTION

For large rotary generator/motor, a number of air channels are arranged in the stator in order to cool the stator coil and core, which is a common cooling way. The air may flow in different manner in various structures. The so-called forward airflow is diverted to the air channels of stator from the gap, while the so-called reverse airflow converges to the gap from the air channels of stator, wherein the forward airflow is in common direction in most of the generator/motor while the reverse airflow is otherwise.

In the structure of a generator/motor, the back behind the air channels is relatively large, where the air pressure inside the air channel is regarded as constant, but the gap for airflow is restricted by the design of the electromagnetic parts in the generator/motor, whereby the air pressure varies complexly therein due to the continuous separation or convergence of the airflows in the axial direction of the gap. In particular, for the forward flow, as the air flow is diverted to the air channels continuously, the dynamic air pressure keeps decreasing and the static air pressure keeps increasing, thus the air pressure difference between the gap and the back behind the air channels is increased so that the airflow speed inside the air channels of stator also keeps increasing along the airflow direction; in contrast, for the reverse airflow, as the air flow converges continuously, the dynamic air pressure keeps increasing and the static air pressure keeps decreasing, thus the air pressure difference between the back behind the air channels and the gap is increased so that the airflow inside the air channels of stator will be rising along the airflow direction.

Research has shown that, if the maximum combined velocity of the airflow in the gap exceeds 30m/s, it is likely to cause uneven velocity distribution in the air channels of stator, resulting in a large temperature difference of the stator coil or core in the axial direction, regardless of whether the airflow is forward or reverse. Nowadays, the main technical solution is that a stepped tooth structure is configured at the edge of segment of the stator's core, that is, the diameter of the segments near the core edge is larger than the others, thereby increasing the flow area of air in the gap and reducing the airflow speed in the gap, therefore improving the uniformity of the airflow speed in the air channels and also improving the uniformity of the axial temperature distribution of the coil and the core. The structure of the edge of segment of the core plays a significant role for axially compressing the core segments, whereas the stepped tooth structure would impact the compression of the core segments.

Chinese patent publication CN207559785U published on 29 June 2018 discloses a motor with air slots in stator, comprising a motor base, a stator and a rotor, wherein the stator has an outer surface provided with radial air channels, and a punching cavity mounted with a coil and a wedge, characterized in that, a gap is provided between the wedge and an inner circular surface of the stator, an air inlet and an air outlet are provided on one side of the motor base, a stator pressing plate is mounted at the end of the stator, wherein the pressing plate is fixed to the motor base, and a plurality of air holes are arranged on the pressing plate. A ring plate is provided between the end of the rotor and the motor base, wherein the ring plate, the stator and the pressing plated divide the inner space of the motor base into a guide chamber I and a guide chamber II , the guide chamber I and the guide chamber II are in air communication with the gap through the air holes, the air channels of stator and a gap between the stator and rotor.

European patent publication EP3351791 published on 25 July 2018 discloses a stator support for a gearless wind generator. The invention relates to a stator support for a stator of a direct drive wind generator having an external rotor, which stator support is supported on a bearing element by a fixing element, wherein the fixing element has a central flange which can be connected to the bearing unit, and the radial course of said fixing element in the direction of the exterior widens axially towards the end faces of the stator in order to create a cavity radially below the stator.

Chinese patent publication CN102332780 published on 25 January 2012 discloses a wind generator comprising a rotor and a stator frame which are mutually matched, wherein a communicated circular air gap is formed between the rotor and the stator frame; the external circumference surface of the stator frame is provided with a circle of annular groove; the two sides of the annular groove are respectively provided with a baffle; the interior of the annular groove is axially provided with vertical rib plates along a stator; the vertical rib plates divide the annular groove into a plurality of ventilating cavities; the ventilating cavities are cold air cavities or hot air cavities; the cold air cavities and the hot air cavities are alternately arranged on the external circumference surface of the stator frame; and the bottoms of each cold air cavity and each hot air cavity are respectively connected with a cold air inputting channel and a hot air outputting channel. According to the wind driven generator provided by the invention, each cold air area channel and each hot air area channel are distributed crosswise, have clear and definite functions and do not interfere with each other; the cooling effect is good, the needed cooling air quantity is greatly reduced, and the work efficiency of the generator is improved; and the wind driven generator has a compact structure, is convenient to structurally design, and has good promotion value.

For the disclosed motor with air slots in stator, although the axial ventilation volume inside the motor is increased, the axial airflow speed in the air channels of stator is a lack of uniformity so that the axial temperature difference of the stator coil and the core cannot be effectively reduced.

### SUMMARY OF THE INVENTION

It is an objective of the invention to provide a method for improving uniformity of axial temperature distribution of stator to solve the above indicated problem. The present invention is advantageous in keeping a static air pressure difference at a constant value, and uniformizing the axial airflow speed in the air channels of stator. The present invention is simple and flexible in operation and convenient to be implemented, thereby effectively reducing the axial temperature difference of the stator coil and the core, ensuring the reliability and stability of the generator/motor.

This is achieved by the method according to the invention as defined by claim 1 and by the structure according to the invention as defined by claim 6. Advantageous embodiments are defined by the dependent claims.

### BRIEF DESCRIPTION OF DRAWINGS

The present invention will be described in further detail with reference to the accompanying drawings and detailed description, in which:
FIG.1 is a schematic view showing a structure for improving uniformity of axial temperature distribution of stator according to the present invention;
FIG.2 is a schematic view showing a core segment according to the present invention;

List of reference characters:
1. Rotor core; 2. Rotor base; 3. Rotor magnetic steel; 4. Stator core; 5. First stator pressing plate; 6. Second stator pressing plate; 7. Screw; 8. Axial ring plate; 9. Core segment; 10. Air channel of stator; 11. Circumferential ring plate; 12. Gap; 13. Space behind the stator core; 14. Punching sheet of core; 15. Slot.

### DETAILED DESCRIPTION OF THE INVENTION

### Embodiment 1

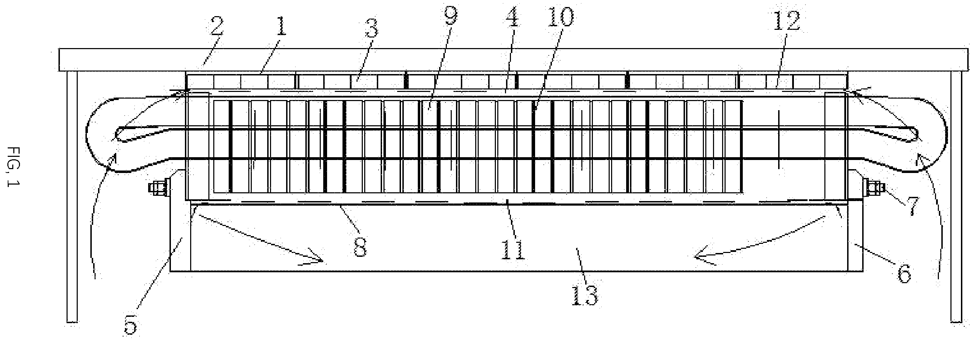

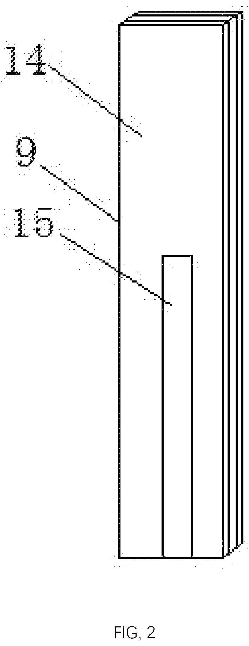

Referring to FIGs. 1-2, a method for improving uniformity of axial temperature distribution of a stator according to claim 1 comprises steps of:
a. installing a structure for improving uniformity of axial temperature distribution of stator to a wind generator;
b. installing a first stator pressing plate 5, a second stator pressing plate 6, an axial ring plate 8, a circumferential ring plate 11 and a stator core 4 for the structure for improving uniformity of axial temperature distribution of stator, wherein an angle between the circumferential ring plate 11 and the axial ring plate 8 is 85 degrees, forming a space 13 behind a stator core;
c. configuring a two-way airflow, in an axial direction of stator, having same airflow volume between the space 13 behind the stator core and the gap 12.

### Embodiment 2

Referring to FIGs. 1-2, a method for improving uniformity of axial temperature distribution of a stator according to claim 1 comprises steps of:
a. installing a structure for improving uniformity of axial temperature distribution of stator to a wind generator;
b. installing a first stator pressing plate 5, a second stator pressing plate 6, an axial ring plate 8, a circumferential ring plate 11 and a stator core 4 for the structure for improving uniformity of axial temperature distribution of stator, wherein an angle between the circumferential ring plate 11 and the axial ring plate 8 is 90 degrees, forming a space 13 behind a stator core;
c. configuring a two-way airflow, in an axial direction of stator, having same airflow volume between the space 13 behind the stator core and the gap 12.

### Embodiment 3

Referring to FIGs. 1-2, a method for improving uniformity of axial temperature distribution of a stator according to claim 1 comprises steps of:
a. installing a structure for improving uniformity of axial temperature distribution of stator to a wind generator;
b. installing a first stator pressing plate 5, a second stator pressing plate 6, an axial ring plate 8, a circumferential ring plate 11 and a stator core 4 for the structure for improving uniformity of axial temperature distribution of stator, wherein an angle between the circumferential ring plate 11 and the axial ring plate 8 is 95 degrees, forming a space 13 behind a stator core;
c. configuring a two-way airflow, in an axial direction of stator, having same airflow volume between the space 13 behind the stator core and the gap 12.

### Embodiment 4

Referring to FIGs. 1-2, a method for improving uniformity of axial temperature distribution of a stator according to claim 1 comprises steps of:
a. installing a structure for improving uniformity of axial temperature distribution of stator to a wind generator;
b. installing a first stator pressing plate 5, a second stator pressing plate 6, an axial ring plate 8, a circumferential ring plate 11 and a stator core 4 for the structure for improving uniformity of axial temperature distribution of stator, wherein an angle between the circumferential ring plate 11 and the axial ring plate 8 is 85 degrees, forming a space 13 behind a stator core;
c. configuring a two-way airflow, in an axial direction of stator, having same airflow volume between the space 13 behind the stator core and the gap 12.

The structure for improving uniformity of axial temperature distribution of stator comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4. The core segments 9 comprise a plurality of punching sheets 14 configured with slots 15 for placing stator coil, wherein the punching sheets 14 are stacked to form the core segments 9.

The axial ring plate 8 encloses a space like a truncated cone whose two ends have a diameter larger than the diameter of the middle therebetween.

The stator core comprises a plurality of core segments connected by the screw whose one end is fixed to the first stator pressing plate and the other end is fixed to the second stator pressing plate. The air channel is formed between any two of adjacent core segments. The axial ring plate is connected to/between the first stator pressing plate and the second stator pressing plate, and the circumferential ring plate is connected to the core segments, wherein the circumferential ring plate is connected with the axial ring plate. A gap is formed between the stator core and the rotor core. A space behind the stator core is enclosed by the first stator pressing plate, the second stator pressing plate, the axial ring plate and the stator core. The structure is configured in this manner such that the space behind the stator core can be communicated with the gap between the stator core and the rotor core, thereby a two-way airflow, in an axial direction of stator, having same airflow volume between the space behind the stator core and the gap is established, achieving approximately equally dynamic air pressure, a constant static air pressure difference, between the space behind the stator core and the gap at a same axial position, and uniformizing the axial airflow speed in the air channels of stator. The structure is therefore advantageous in the uniformity of axial temperature distribution of stator coil and core, and the original structure of generator/motor will not be affected. The structure is simple and flexible in operation and convenient to be implemented, and may reduce the axial temperature difference of generator/motor to 10-15K.

The core segments comprise a plurality of punching sheets configured with slots for placing stator coil, wherein the punching sheets are stacked to form the core segments. The structure is simple to manufacture and convenient to be implemented, and has low cost for maintenance.

The axial ring plate encloses a space like a truncated cone whose two ends have a diameter larger than the diameter of the middle therebetween, which has excellent heat dissipation that may reduce the axial temperature difference of generator/motor to 10-15K.

### Embodiment 5

Referring to FIGs. 1-2, a method for improving uniformity of axial temperature distribution of a stator according to claim 1 comprises steps of:
a. installing a structure for improving uniformity of axial temperature distribution of stator to a wind generator;
b. installing a first stator pressing plate 5, a second stator pressing plate 6, an axial ring plate 8, a circumferential ring plate 11 and a stator core 4 for the structure for improving uniformity of axial temperature distribution of stator, wherein an angle between the circumferential ring plate 11 and the axial ring plate 8 is 90 degrees, forming a space 13 behind a stator core;
c. configuring a two-way airflow, in an axial direction of stator, having same airflow volume between the space 13 behind the stator core and the gap 12.

The structure for improving uniformity of axial temperature distribution of stator comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4. The core segments 9 comprise a plurality of punching sheets 14 configured with slots 15 for placing stator coil, wherein the punching sheets 14 are stacked to form the core segments 9.

The radial distance between the axial ring plate 8 and the core segments 9 is equal to the width of the gap 12.

The axial ring plate 8 encloses a space like a cylinder.

The radial distance between the axial ring plate and the core segments is equal to the width of the gap. In this way, such structure not only ensures the uniform heat dissipation of the stator coil and core but can also be made more compactly and occupies smaller space.

The axial ring plate encloses a space like a cylinder. Such structure not only achieves good heat dissipation, but is also simple to manufacture and may reduce the temperature rise of generator/motor to 10K.

### Embodiment 6

Referring to FIGs. 1-2, a method for improving uniformity of axial temperature distribution of a stator according to claim 1 comprises steps of:
a. installing a structure for improving uniformity of axial temperature distribution of stator to a wind generator;
b. installing a first stator pressing plate 5, a second stator pressing plate 6, an axial ring plate 8, a circumferential ring plate 11 and a stator core 4 for the structure for improving uniformity of axial temperature distribution of stator, wherein an angle between the circumferential ring plate 11 and the axial ring plate 8 is 95 degrees, forming a space 13 behind a stator core;
c. configuring a two-way airflow, in an axial direction of stator, having same airflow volume between the space 13 behind the stator core and the gap 12.

The structure for improving uniformity of axial temperature distribution of stator comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4.

The core segments 9 comprise a plurality of punching sheets 14 configured with slots 15 for placing stator coil, wherein the punching sheets 14 are stacked to form the core segments 9.

The radial distance between the axial ring plate 8 and the core segments 9 is equal to the width of the gap 12.

The axial ring plate 8 is configured with air passages corresponding to the ends of the core segments 9 for airflow being into or out of the generator/motor.

The axial ring plate 8 encloses a space like a truncated cone whose two ends have a diameter smaller than the diameter of the middle therebetween.

The axial ring plate encloses a space like a truncated cone whose two ends have a diameter smaller than the diameter of the middle therebetween, which may further improve the heat dissipation and may reduce the temperature rise of generator/motor to 10-15K.

### Embodiment 7

Referring to FIGs. 1-2, a structure for improving uniformity of axial temperature distribution of a stator according to claim 6 comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4.

### Embodiment 8

Referring to FIGs. 1-2, a structure for improving uniformity of axial temperature distribution of a stator according to claim 6 comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4.

The core segments 9 comprise a plurality of punching sheets 14 configured with slots 15 for placing stator coil, wherein the punching sheets 14 are stacked to form the core segments 9.

The radial distance between the axial ring plate 8 and the core segments 9 is equal to the width of the gap 12.

The axial ring plate 8 is configured with air passages corresponding to the ends of the core segments 9 for airflow being into or out of the generator/motor.

### Embodiment 9

Referring to FIGs. 1-2, a structure for improving uniformity of axial temperature distribution of a stator according to claim 6 comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4.

The core segments 9 comprise a plurality of punching sheets 14 configured with slots 15 for placing stator coil, wherein the punching sheets 14 are stacked to form the core segments 9.

The radial distance between the axial ring plate 8 and the core segments 9 is equal to the width of the gap 12.

The axial ring plate 8 is configured with air passages corresponding to the ends of the core segments 9 for airflow being into or out of the generator/motor.

The angle between the circumferential ring plate 11 and the axial ring plate 8 is 85 degrees.

The axial ring plate 8 encloses a space like a truncated cone whose two ends have a diameter larger than the diameter of the middle therebetween.

### Embodiment 10

Referring to FIGs. 1-2, a structure for improving uniformity of axial temperature distribution of a stator according to claim 6 comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4.

The core segments 9 comprise a plurality of punching sheets 14 configured with slots 15 for placing stator coil, wherein the punching sheets 14 are stacked to form the core segments 9.

The radial distance between the axial ring plate 8 and the core segments 9 is equal to the width of the gap 12.

The axial ring plate 8 is configured with air passages corresponding to the ends of the core segments 9 for airflow being into or out of the generator/motor.

The angle between the circumferential ring plate 11 and the axial ring plate 8 is 90 degrees.

The axial ring plate 8 encloses a space like a cylinder.

### Embodiment 11

Referring to FIGs. 1-2, a structure for improving uniformity of axial temperature distribution of a stator according to claim 6 comprises a rotor base 2 and a rotor core 1 arranged on the rotor base 2, wherein the rotor core 1 is provided with a plurality of permanent magnets 3 which are arranged in the axial direction of the rotor core 1. The structure further comprises a stator core 4, a first stator pressing plate 5, a second stator pressing plate 6, a screw 7 and an axial ring plate 8, wherein the stator core 4 comprises a plurality of core segments 9 connected by the screw 7 whose one end is fixed to the first stator pressing plate 5 and the other end is fixed to the second stator pressing plate 6. An air channel 10 is formed between any two of adjacent core segments 9. The axial ring plate 8 is connected to/between the first stator pressing plate 5 and the second stator pressing plate 6, and a circumferential ring plate 11 is connected to the core segments 9, wherein the circumferential ring plate 11 is connected to the axial ring plate 8. A gap 12 is formed between the stator core 4 and the rotor core 1. A space 13 behind the stator core is enclosed by the first stator pressing plate 5, the second stator pressing plate 6, the axial ring plate 8 and the stator core 4.

The core segments 9 comprise a plurality of punching sheets 14 configured with slots 15 for placing stator coil, wherein the punching sheets 14 are stacked to form the core segments 9.

The radial distance between the axial ring plate 8 and the core segments 9 is equal to the width of the gap 12.

The axial ring plate 8 is configured with air passages corresponding to the ends of the core segments 9 for airflow being into or out of the generator/motor.

The angle between the circumferential ring plate 11 and the axial ring plate 8 is 95 degrees.

The axial ring plate 8 encloses a space like a truncated cone whose two ends have a diameter smaller than the diameter of the middle therebetween.

## Claims

1. A method for improving uniformity of axial temperature distribution of stator, the method comprises steps of:
a. installing a structure for improving uniformity of axial temperature distribution of stator to a wind generator; the structure for improving uniformity of axial temperature distribution of stator comprises a rotor base (2) and a rotor core (1) arranged on the rotor base (2), wherein the rotor core (1) is provided with a plurality of permanent magnets (3) which are arranged in the axial direction of the rotor core (1); the structure further comprises a stator core (4), a first stator pressing plate (5), a second stator pressing plate (6), a screw (7) and an axial ring plate (8), wherein the stator core (4) comprises a plurality of core segments (9) connected by the screw (7) whose one end is fixed to the first stator pressing plate (5) and the other end is fixed to the second stator pressing plate (6); an air channel 10 is formed between any two of adjacent core segments (9); the axial ring plate (8) is connected to/between the first stator pressing plate (5) and the second stator pressing plate (6), and a circumferential ring plate (11) is connected to the core segments (9), wherein the circumferential ring plate (11) is connected to the axial ring plate (8); a gap (12) is formed between the stator core (4) and the rotor core (1), and a space (13) behind the stator core is enclosed by the first stator pressing plate (5), the second stator pressing plate (6), the axial ring plate (8) and the stator core (4); the radial distance between the axial ring plate (8) and the core segments (9) is equal to the width of the gap (12); installing the first stator pressing plate (5), the second stator pressing plate (6), the axial ring plate (8), the circumferential ring plate (11) and the stator core (4) for the structure for improving uniformity of axial temperature distribution of the stator, wherein an angle between the circumferential ring plate (11) and the axial ring plate (8) is 85 degrees to 95 degrees; and
b. configuring a two-way airflow, in an axial direction of stator, having same airflow volume between the space (13) behind the stator core and the gap (12).

2. The method according to claim 2, **characterized in that** the core segments (9) comprise a plurality of punching sheets (14) configured with slots (15) for placing stator coil, wherein the punching sheets (14) are stacked to form the core segments (9).

3. The method according to claim 2, **characterized in that** the axial ring plate (8) is configured with air passages corresponding to the ends of the core segments (9) for airflow being into or out of the generator/motor.

4. The method according to claim 2, **characterized in that** the axial ring plate (8) encloses a space like a truncated cone whose two ends have a diameter smaller than the diameter of the middle therebetween.

5. The method according to claim 2, **characterized in that**, the axial ring plate (8) encloses a space like a truncated cone whose two ends have a diameter larger than the diameter of the middle therebetween.

6. A structure for improving uniformity of axial temperature distribution of stator, the structure comprises a rotor base (2) and a rotor core (1) arranged on the rotor base (2), wherein the rotor core (1) is provided with a plurality of permanent magnets (3) which are arranged in the axial direction of the rotor core (1), the structure further comprises a stator core (4), a first stator pressing plate (5), a second stator pressing plate (6), a screw (7) and an axial ring plate (8), wherein the stator core (4) comprises a plurality of core segments (9) connected by the screw (7) whose one end is fixed to the first stator pressing plate (5) and the other end is fixed to the second stator pressing plate (6); an air channel (10) is formed between any two of adjacent core segments (9); the axial ring plate (8) is connected to/between the first stator pressing plate (5) and the second stator pressing plate (6), and a circumferential ring plate (11) is connected to the core segments (9), wherein the circumferential ring plate (11) is connected to the axial ring plate (8); a gap (12) is formed between the stator core (4) and the rotor core (1), and a space (13) behind the stator core is enclosed by the first stator pressing plate (5), the second stator pressing plate (6), the axial ring plate (8) and the stator core (4), **characterized in that** the radial distance between the axial ring plate (8) and the core segments (9) is equal to the width of the gap (12).

7. The structure according to claim 8, **characterized in that** the core segments (9) comprise a plurality of punching sheets (14) configured with slots (15) for placing stator coil, wherein the punching sheets (14) are stacked to form the core segments (9).

## Patentansprüche

1. Verfahren zum Verbessern einer Gleichförmigkeit einer axialen Temperaturverteilung eines Stators, wobei das Verfahren folgende Schritte umfasst:
a. Installieren einer Konstruktion zum Verbessern der Gleichförmigkeit der axialen Temperaturverteilung des Stators in einen Windgenerator; wobei die Konstruktion zum Verbessern der Gleichförmigkeit der axialen Temperaturverteilung des Stators eine Rotorbasis (2) und einen auf der Rotorbasis (2) angeordneten Rotorkern (1) umfasst, wobei der Rotorkern (1) mit einer Vielzahl von Permanentmagneten (3) bereitgestellt ist, die in der axialen Richtung des Rotorkerns (1) angeordnet sind; die Konstruktion ferner einen Statorkern (4), eine erste Statorpressplatte (5), eine zweite Statorpressplatte (6), eine Schraube (7) und eine axiale Ringplatte (8) umfasst, wobei der Statorkern (4) eine Vielzahl von Kernsegmenten (9) umfasst, die durch die Schraube (7) verbunden sind, deren eines Ende an der ersten Statorpressplatte (5) befestigt ist und das andere Ende an der zweiten Statorpressplatte (6) befestigt ist; ein Luftkanal 10 zwischen zwei beliebigen von benachbarten Kernsegmenten (9) gebildet ist; die axiale Ringplatte (8) mit/zwischen der ersten Statorpressplatte (5) und der zweiten Statorpressplatte (6) verbunden ist und eine Umfangsringplatte (11) mit den Kernsegmenten (9) verbunden ist, wobei die Umfangsringplatte (11) mit der axialen Ringplatte (8) verbunden ist; ein Spalt (12) zwischen dem Statorkern (4) und dem Rotorkern (1) gebildet ist und ein Raum (13) hinter dem Statorkern von der ersten Statorpressplatte (5), der zweiten Statorpressplatte (6), der axialen Ringplatte (8) und dem Statorkern (4) umschlossen ist; der radiale Abstand zwischen der axialen Ringplatte (8) und den Kernsegmenten (9) gleich der Breite des Spaltes (12) ist; Installieren der ersten Statorpressplatte (5), der zweiten Statorpressplatte (6), der axialen Ringplatte (8), der Umfangsringplatte (11) und des Statorkerns (4) für die Konstruktion zum Verbessern einer Gleichförmigkeit einer axialen Temperaturverteilung des Stators, wobei ein Winkel zwischen der Umfangsringplatte (11) und der axialen Ringplatte (8) 85 Grad bis 95 Grad ist; und
b. Konfigurieren eines Zweiwege-Luftstroms in einer axialen Richtung des Stators, der ein gleiches Luftstromvolumen zwischen dem Raum (13) hinter dem Statorkern und dem Spalt (12) aufweist.

2. Verfahren nach Anspruch 2, **dadurch gekennzeichnet, dass** die Kernsegmente (9) eine Vielzahl von Stanzblechen (14) umfassen, die mit Schlitzen (15) zum Platzieren der Statorspule konfiguriert sind, wobei die Stanzbleche (14) gestapelt sind, um die Kernsegmente (9) zu bilden.

3. Verfahren nach Anspruch 2, **dadurch gekennzeichnet, dass** die axiale Ringplatte (8) mit Luftdurchlässen konfiguriert ist, die den Enden der Kernsegmente (9) entsprechen, damit der Luftstrom in den Generator/Motor hinein- oder aus diesem herausströmt.

4. Verfahren nach Anspruch 2, **dadurch gekennzeichnet, dass** die axiale Ringplatte (8) einen Raum wie einen Kegelstumpf umschließt, dessen beide Enden einen Durchmesser aufweisen, der kleiner ist als der Durchmesser der Mitte dazwischen.

5. Verfahren nach Anspruch 2, **dadurch gekennzeichnet, dass** die axiale Ringplatte (8) einen Raum wie einen Kegelstumpf umschließt, dessen beide Enden einen Durchmesser aufweisen, der größer ist als der Durchmesser der Mitte dazwischen.

6. Konstruktion zum Verbessern der Gleichförmigkeit der axialen Temperaturverteilung des Stators, wobei die Konstruktion eine Rotorbasis (2) und einen auf der Rotorbasis (2) angeordneten Rotorkern (1) umfasst, wobei der Rotorkern (1) mit einer Vielzahl von Permanentmagneten (3) bereitgestellt ist, die in der axialen Richtung des Rotorkerns (1) angeordnet sind, die Konstruktion ferner einen Statorkern (4), eine erste Statorpressplatte (5), eine zweite Statorpressplatte (6), eine Schraube (7) und eine axiale Ringplatte (8) umfasst, wobei der Statorkern (4) eine Vielzahl von Kernsegmenten (9) umfasst, die durch die Schraube (7) verbunden sind, deren eines Ende an der ersten Statorpressplatte (5) befestigt ist und das andere Ende an der zweiten Statorpressplatte (6) befestigt ist; ein Luftkanal 10 zwischen zwei beliebigen von benachbarten Kernsegmenten (9) gebildet ist; die axiale Ringplatte (8) mit/zwischen der ersten Statorpressplatte (5) und der zweiten Statorpressplatte (6) verbunden ist und eine Umfangsringplatte (11) mit den Kernsegmenten (9) verbunden ist, wobei die Umfangsringplatte (11) mit der axialen Ringplatte (8) verbunden ist; ein Spalt (12) zwischen dem Statorkern (4) und dem Rotorkern (1) gebildet ist und ein Raum (13) hinter dem Statorkern von der ersten Statorpressplatte (5), der zweiten Statorpressplatte (6), der axialen Ringplatte (8) und dem Statorkern (4) umschlossen ist, **dadurch gekennzeichnet, dass** der radiale Abstand zwischen der axialen Ringplatte (8) und den Kernsegmenten (9) gleich der Breite des Spaltes (12) ist.

7. Konstruktion nach Anspruch 8, **dadurch gekennzeichnet, dass** die Kernsegmente (9) eine Vielzahl von Stanzblechen (14) umfassen, die mit Schlitzen (15) zum Platzieren der Statorspule konfiguriert sind, wobei die Stanzbleche (14) gestapelt sind, um die Kernsegmente (9) zu bilden.

## Revendications

1. Procédé destiné à améliorer l'uniformité de distribution de température axiale d'un stator, le procédé comprend les étapes suivantes :
a. l'installation d'une structure destinée à améliorer l'uniformité de distribution de température axiale d'un stator d'une éolienne ; la structure destinée à améliorer l'uniformité de distribution de température axiale d'un stator comprend une base de rotor (2) et un noyau de rotor (1) disposé sur la base (2), dans lequel le noyau de rotor (1) est pourvu de plusieurs aimants permanents (3) qui sont disposés dans la direction axiale du noyau de rotor (1) ; la structure comprend également un noyau de stator (4), une première plaque de pression de stator (5), une seconde plaque de pression de stator (6), une vis (7) et une plaque annulaire axiale (8), dans lequel le noyau de stator (4) comprend une pluralité de segments de noyau (9) reliés par la vis (7), dont une extrémité est fixée à la première plaque de pression de stator (5) et l'autre à la seconde plaque de pression de stator (6) ; un canal d'air (10) est formé entre deux quelconques segments de noyau (9) adjacents ; la plaque annulaire axiale (8) est reliée à/entre la première plaque de pression de stator (5) et la seconde plaque de pression de stator (6), et une plaque annulaire circonférentielle (11) est reliée aux segments de noyau (9), dans lequel la plaque annulaire circonférentielle (11) est reliée à la plaque annulaire axiale (8) ; un espace (12) est formé entre le noyau de stator (4) et le noyau de rotor (1), et un espace (13) derrière le noyau de stator est entouré par la première plaque de pression de stator (5), la seconde plaque de pression de stator (6), la plaque annulaire axiale (8) et le noyau de stator (4) ; la distance radiale entre la plaque annulaire axiale (8) et les segments de noyau (9) est égale à la largeur de l'espace (12) ; l'installation de la première plaque de pression de stator (5), de la seconde plaque de pression de stator (6), de la plaque annulaire axiale (8), de la plaque annulaire circonférentielle (11) et du noyau de stator (4) pour la structure destinée à améliorer l'uniformité de distribution de température axiale d'un stator, dans lequel un angle entre la plaque annulaire circonférentielle (11) et la plaque annulaire axiale (8) est de 85 degrés à 95 degrés ; et
b. la configuration d'un flux d'air bidirectionnel, dans une direction axiale d'un stator, ayant le même volume de flux d'air entre l'espace (13) derrière le noyau de stator et l'espace (12).

2. Procédé selon la revendication 2, **caractérisé en ce que** les segments de noyau (9) comprennent une pluralité de feuilles perforées (14) configurées avec des fentes (15) pour placer la bobine du stator, dans lequel les feuilles perforées (14) sont empilées pour former les segments de noyau (9).

3. Procédé selon la revendication 2, **caractérisé en ce que** la plaque annulaire axiale (8) est configurée avec des passages d'air correspondant aux extrémités des segments de noyau (9) pour que l'air puisse entrer ou sortir du générateur/moteur.

4. Procédé selon la revendication 2, **caractérisé en ce que** la plaque annulaire axiale (8) entoure un espace semblable à un cône tronqué dont les deux extrémités ont un diamètre inférieur au diamètre du milieu entre elles.

5. Procédé selon la revendication 2, **caractérisé en ce que**, la plaque annulaire axiale (8) entoure un espace semblable à un cône tronqué dont les deux extrémités ont un diamètre supérieur au diamètre du milieu entre elles.

6. Structure destinée à améliorer l'uniformité de distribution de température axiale d'un stator, la structure comprend une base de rotor (2) et un noyau de rotor (1) disposé sur la base (2), dans lequel le noyau de rotor (1) est pourvu de plusieurs aimants permanents (3) qui sont disposés dans la direction axiale du noyau de rotor (1) ; la structure comprend également un noyau de stator (4), une première plaque de pression de stator (5), une seconde plaque de pression de stator (6), une vis (7) et une plaque annulaire axiale (8), dans lequel le noyau de stator (4) comprend une pluralité de segments de noyau (9) reliés par la vis (7), dont une extrémité est fixée à la première plaque de pression de stator (5) et l'autre à la seconde plaque de pression de stator (6) ; un canal d'air (10) est formé entre deux quelconques segments de noyau (9) adjacents ; la plaque annulaire axiale (8) est reliée à/entre la première plaque de pression de stator (5) et la seconde plaque de pression de stator (6), et une plaque annulaire circonférentielle (11) est reliée aux segments de noyau (9), dans lequel la plaque annulaire circonférentielle (11) est reliée à la plaque annulaire axiale (8) ; un espace (12) est formé entre le noyau de stator (4) et le noyau de rotor (1), et un espace (13) derrière le noyau de stator est entouré par la première plaque de pression de stator (5), la seconde plaque de pression de stator (6), la plaque annulaire axiale (8) et le noyau de stator (4) ; **caractérisé en ce que** la distance radiale entre la plaque annulaire axiale (8) et les segments de noyau (9) est égale à la largeur de l'espace (12).

7. Procédé selon la revendication 8, **caractérisé en ce que** les segments de noyau (9) comprennent une pluralité de feuilles perforées (14) configurées avec des fentes (15) pour placer la bobine de stator, dans lequel les feuilles perforées (14) sont empilées pour former les segments de noyau (9).
